# EUROPEAN PATENT APPLICATION

(11) **EP 4 682 611 A1**
(43) Date of publication of application: **21.01.2026**
(21) Application number: 24770271.5
(22) Date of filing: 05.02.2024
(51) Int. Cl.: G02B 21/06

(54) **COMPENSATION DEVICE, MICROSCOPE SYSTEM, AND COMPENSATION METHOD**

(30) Priority: 15.03.2023 JP 2023040234
(71) Applicant: NIKON CORPORATION, Tokyo 140-8601 (JP)
(72) Inventor: TERUI, Yuki, Tokyo 140-8601 (JP); TODA, Shogo, Tokyo 140-8601 (JP)
(74) Representative: Hoffmann Eitle
(86) International application number: PCT/JP2024/003637
(87) International publication number: WO 2024/190151

(57) **Abstract**

[Problem] To suppress a reduction in excitation efficiency resulting from group delay dispersion.

[Means to Solve Problem] A compensator that compensates for negative group delay dispersion of pulsed light irradiated onto a sample via an optical system, the negative group delay dispersion being caused to occur by the optical system. The compensator includes a plurality of plates that generate positive group delay dispersion, and a switching unit that can switch each plate between a first state where the plate is arranged in a position through which the pulsed light passes and a second state where the plate is arranged in a position through which the pulsed light does not pass, and can set a predetermined combination of the plurality of plates to the first state according to a wavelength of the pulsed light.

## Description

### Technical Field

The present invention relates to a compensator, a microscope system, and a compensation method.

### Background Art

In some cases, pulsed light is employed as the laser light used to irradiate a sample from an optical microscope (see Patent Literature 1). When the pulsed light irradiating the sample passes through the optical system, the pulse width may broaden due to group delay dispersion, potentially leading to a reduction in excitation efficiency.

### Citation List

### Patent Literature

[Patent Literature 1] Japanese Patent Publication No. 4276971

### Summary of Invention

According to a first aspect of the present invention, there is provided a compensator that compensates for negative group delay dispersion of pulsed light irradiated onto a sample via an optical system, the negative group delay dispersion being caused to occur by the optical system. The compensator includes a plurality of plates that generate positive group delay dispersion, and a switching unit that can switch each plate between a first state where the plate is arranged in a position through which the pulsed light passes and a second state where the plate is arranged in a position through which the pulsed light does not pass, and can set a predetermined combination of the plurality of plates to the first state according to a wavelength of the pulsed light.

According to a second aspect of the present invention, there is provided a compensation method for compensating for negative group delay dispersion of pulsed light irradiated onto a sample via an optical system, the negative group delay dispersion being caused to occur by the optical system. The compensation method includes a step of, for a plurality of plates that generate positive group delay dispersion, switching each plate between a first state where the plate is arranged in a position through which the pulsed light passes and a second state where the plate is arranged in a position through which the pulsed light does not pass, wherein the step includes a step of setting a predetermined combination of the plurality of plates to the first state according to a wavelength of the pulsed light.

### Brief Description of the Drawings

Fig. 1 is a diagram showing a configuration example of a microscope system according to a first embodiment.
Fig. 2 is a diagram showing a configuration example of a compensator according to the first embodiment.
Fig. 3 is a diagram for describing a first example of the operational effects according to the first embodiment.
Fig. 4 is a diagram for describing a second example of the operational effects according to the first embodiment.
Fig. 5 is a diagram showing a hardware configuration example of an information processing device according to the first embodiment.
Fig. 6 is a functional block diagram of a processor 42 according to the first embodiment.
Fig. 7 is a diagram showing an example in which a measurement apparatus according to the first embodiment is arranged.
Fig. 8 is a flowchart of a first search method according to the first embodiment.
Fig. 9 is a flowchart of a second search method according to the first embodiment.
Fig. 10 is a flowchart of a third search method according to the first embodiment.
Fig. 11 is a diagram showing a configuration example of a compensator according to a second embodiment.
Fig. 12 is a diagram showing the configuration example of the compensator according to the second embodiment.
Fig. 13A is a diagram for describing the shift in the optical path when pulsed light passes through a plate only once.
Fig. 13B is a diagram for describing the shift in the optical path when pulsed light passes through a plate only once.
Fig. 14A is a diagram for describing the operational effects of the compensator according to the second embodiment.
Fig. 14B is a diagram for describing the operational effects of the compensator according to the second embodiment.
Fig. 15 is a diagram showing a modified example of the compensator according to the first embodiment.
Fig. 16 is a diagram showing a modified example of the compensator according to the first embodiment.
Fig. 17 is a diagram showing a modified example of the compensator according to the first embodiment. Description of Embodiments

Hereinafter, the present invention will be described through embodiments of the invention. However, the invention defined in the claims is not limited to the following embodiments, and not all combinations of features described in the embodiments are essential to the means by which the present invention solves the above problems. In the drawings, the same or similar members are denoted by the same reference signs, and redundant descriptions may be omitted. The shape and size of the elements in the drawings may be exaggerated for the purpose of clearer description. Furthermore, the drawings used in the description of the embodiments all schematically illustrate the configuration components and may not accurately represent their scale, shape, or other attributes. This is because certain parts are emphasized, enlarged, reduced, or omitted to enhance understanding.

### [First Embodiment]

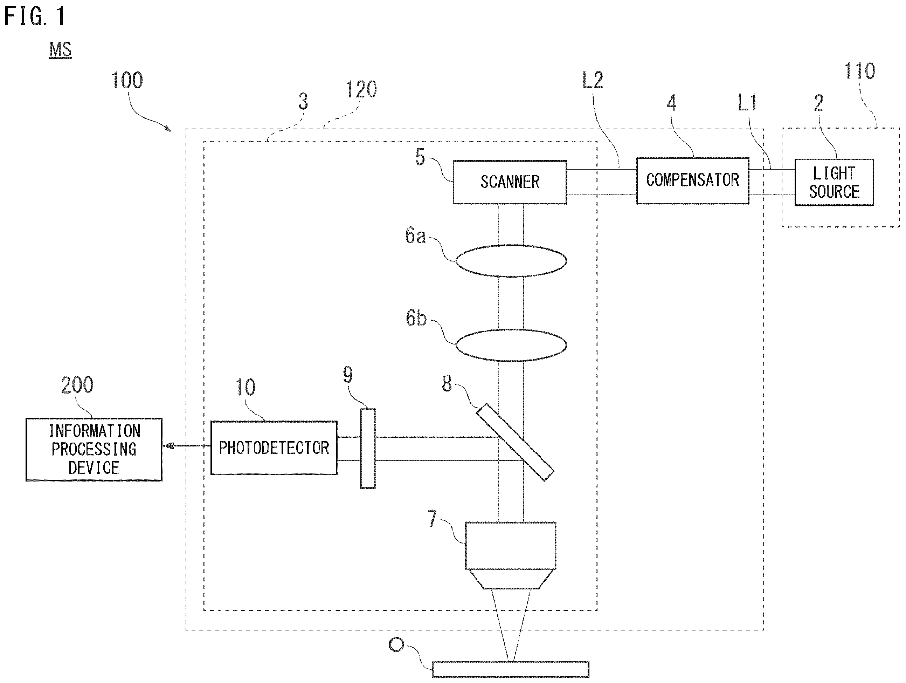

Fig. 1 is a diagram showing a configuration example of a microscope system MS according to a first embodiment. The microscope system MS includes, for example, a microscope 100 and an information processing device 200. In Fig. 1, an example is shown where the microscope 100 is a multiphoton fluorescence microscope. For example, the microscope 100 is a three-photon fluorescence microscope that utilizes fluorescence generated by three-photon excitation. The microscope 100 can also employ a configuration that utilizes harmonic signals, such as SHG and THG, in addition to fluorescence.

The microscope 100 according to the first embodiment includes, for example, a light source unit 110 and a microscope unit 120.

The light source unit 110 includes a light source 2. The light source 2 outputs pulsed light (also referred to as pulsed laser light) L1. For example, the wavelength range of the pulsed light L1, output from the light source 2 used in a three-photon microscope, is longer than the wavelength range output from the light source used in a two-photon microscope. As an example, the wavelength range of the light source used in a two-photon microscope is approximately 800 nm to 1,200 nm, whereas the wavelength range of the light source used in a three-photon microscope (the wavelength range of the pulsed light L1) is approximately 1,200 nm to 1,800 nm. The light source 2 may be, for example, a femtosecond pulsed laser, or a solid-state light source such as an LD (laser diode), which may include an optical fiber in its configuration.

The pulsed light L1 output from the light source 2 passes through a compensator 4 and is output to the microscope unit 120. It should be noted that the pulsed light that passes through the compensator 4 and is directed toward the microscope unit 120 may be referred to as pulsed light L2, to distinguish it from the pulsed light L1.

The microscope unit 120 includes an irradiation unit 3 and the compensator 4. The irradiation unit 3 irradiates a sample O with the pulsed light L2 that is output from the compensator 4. The microscope unit 120 includes, for example, a scanner 5, a scan lens 6a, a tube lens 6b, an objective lens 7, a dichroic mirror 8, a filter 9, and a photodetector 10.

The scanner 5 is a mechanism that two-dimensionally displaces the pulsed light L2. The scanner 5, as an example, has a pair of mirrors (galvanometer mirrors). The pulsed light L2 is reflected by a pair of galvanometer mirrors, whereby the sample O is scanned two-dimensionally. The pair of mirrors are positioned near the conjugate position relative to the pupil of the objective lens 7.

The scan lens 6a and the tube lens 6b are provided in the subsequent stage of the scanner 5. The scan lens 6a focuses the pulsed light L2 emitted from the scanner 5 onto the primary image plane. The tube lens 6b is arranged between the scan lens 6a and the objective lens 7. The tube lens 6b collimates pulsed light L2 into a parallel light beam. The pulsed light L2 from the tube lens 6b enters the dichroic mirror 8.

The dichroic mirror 8 transmits the pulsed light L2. The pulsed light L2 transmitted through the dichroic mirror 8 enters the objective lens 7. The dichroic mirror 8 reflects light with a wavelength shorter than the pulsed light L2.

The objective lens 7 focuses the pulsed light L2, serving as excitation light, to illuminate the sample O. In other words, the pulsed light L2, serving as excitation light, is focused onto the sample O through the objective lens 7, inducing multiphoton excitation. The fluorescence resulting from the sample O passes through the objective lens 7, and is separated in optical path from the pulsed light L2 by the dichroic mirror 8.

The filter 9 is provided in the optical path between the dichroic mirror 8 and the photodetector 10. The filter 9 transmits only the fluorescence wavelength component of the light reflected by the dichroic mirror 8.

The photodetector 10 detects the light transmitted through the filter 9. In other words, the photodetector 10 detects the fluorescence reflected by the dichroic mirror 8 through the filter 9. For example, the photodetector 10 is a photomultiplier tube. The detection signal,
corresponding to the amount of fluorescence light detected by photodetector 10, is output to the information processing device 200, for example.

The microscope unit 120 may have a configuration for confocal detection of fluorescence. In such a case, the dichroic mirror 8 is placed not near the objective lens 7, but in the preceding stage of the scanner 5. The light reflected by the dichroic mirror 8 passes through the filter 9 and is focused on a pinhole by a newly provided lens (not shown in the drawings). The fluorescence transmitted through the pinhole is detected by the photodetector 10 installed in the subsequent stage.

The compensator 4 compensates for the group delay dispersion (GDD) of the pulsed light that is irradiated onto the sample O. Typically, when excitation light passes through an optical system, such as an optical fiber or a lens within an optical device, its pulse width broadens due to group delay dispersion, which can result in a reduction in excitation efficiency. Therefore, the compensator 4 suppresses the reduction in excitation efficiency by compensating for this group delay dispersion.

In two-photon microscopes, a prism pair is used in some cases for compensation of group delay dispersion. When a prism pair is used, negative group delay dispersion can be imparted, and the group delay dispersion can be continuously adjusted by adjusting the prism spacing. However, compensating for the group delay dispersion generated in a three-photon microscope using a prism pair can be challenging.

Specifically, the wavelength of excitation light (hereinafter, referred to as "excitation wavelength") used in a three-photon microscope differs from that used in a two-photon microscope, and the amount of group delay dispersion generated in the optical system also differs between a three-photon microscope and a two-photon microscope. For example, while positive group delay dispersion occurs at a two-photon excitation wavelength, negative group delay dispersion may occur at a three-photon excitation wavelength. In such a case, even if a prism pair is used in a three-photon microscope, positive group delay dispersion cannot be imparted, and it is therefore not possible to compensate for the negative group delay dispersion generated in the three-photon microscope. Therefore, the compensator 4 compensates for the negative group delay dispersion of excitation pulses generated in a three-photon microscope by arranging one or more plates that impart positive group delay dispersion.

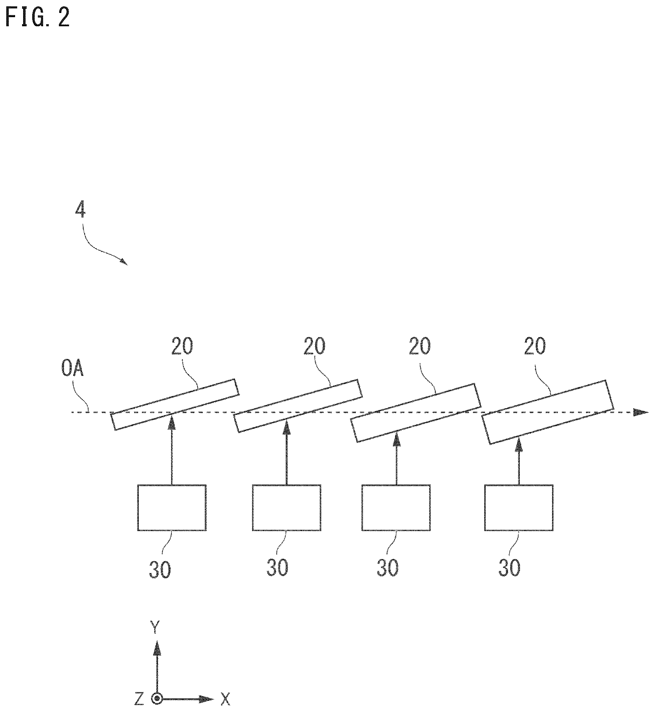

Fig. 2 is a diagram showing a configuration example of the compensator 4 according to the first embodiment. The compensator 4 includes, for example, multiple plates 20 and switching units 30. In Fig. 2, an example is shown in which the number of the plates 20 is four, however, the invention is not limited to this number and is not particularly limited as long as there are multiple plates. The plates 20 shown in Fig. 2 represent a state seen from above. The switching units 30 shown in Fig. 2 are shown schematically and do not accurately represent the structures of the switching units 30.

The multiple plates 20 generate a positive group delay dispersion amount. The pulsed light L1 from the light source 2 passes through the plates 20 arranged on the optical axis, whereby a positive group delay dispersion amount is imparted, and a negative group delay dispersion amount is compensated. In the following description, the amount of positive group delay dispersion imparted by the plates 20 may be referred to as a compensation amount.

The multiple plates 20 may have the same material and thickness, may have the same thickness but different materials, may have the same material but different thicknesses, or may have both different materials and different thicknesses. The material for the plates 20 is, for example, Si (silicon), ZnSe (zinc selenide), or TeO₂ (tellurium dioxide). For example, even with identical thicknesses, the compensation amount of a Si plate 20 is greater than that of ZnSe. It is desirable to select a material suitable for realizing the desired compensation amount.

The amount of negative group delay dispersion to be compensated for varies depending on the wavelength of the pulsed light L1 from the light source 2. Therefore, in the compensator 4, of the multiple plates 20, a plate 20 corresponding to the wavelength of the pulsed light L1 from the light source 2 is arranged on the optical axis. In other words, of the multiple plates 20, one or more plates 20 for imparting a compensation amount for compensating for the negative group delay dispersion amount according to the wavelength of the pulsed light L1 are arranged on the optical axis within the compensator 4. The pulsed light L1 from the light source 2 passes through the plates 20 arranged on the optical axis within the compensator 4, thereby compensating for the negative group delay dispersion. Thus, the compensator 4 can perform compensation appropriate for various excitation pulse wavelengths by combining one or more plates 20.

The plates 20 arranged on the optical axis within the compensator 4 are arranged such that, for example, the pulsed light L1 is incident on the plates 20 at a specific incidence angle. The specific incidence angle is, for example, a Brewster angle. For example, the Brewster angle of Si at 1,600 nm is approximately 74°. However, the specific incidence angle is not limited to Brewster angles. The multiple plates 20 have a switching unit 30 for switching the plate between a first state where it is arranged on the optical axis, and a second state where it is arranged off the optical axis. The first state is a state where the pulsed light L1 is incident on the plate 20 at a specific incidence angle. The second state is a state where the pulsed light L1 is not incident on the plate 20. Among the multiple plates 20, only the plates 20 in the first state compensate for the negative group delay dispersion to be compensated.

The switching units 30 are, for example, flip mounts or sliders. The plates 20 are held by the switching units 30, and each plate 20 can be switched between the first state and the second state. This switching may be performed manually or automatically by a controller (not shown in the drawings). In Fig. 2, the switching unit 30 is provided for each plate 20, but the invention is not limited to this example, and all or some of the switching units 30 may be integrally formed. In other words, the switching units 30 may have any configuration as long as it is possible to switch each plate 20 between the first state and the second state. The user or the controller appropriately selects plates 20 from the multiple plates 20 to compensate for group delay dispersion, which varies depending on the excitation wavelength. The selected plates 20 are then set to the first state using the switching units 30.

An example is described below in which the individual thicknesses of the multiple plates 20 differ from one another. The multiple plates 20 are all made of the same material. When continuous adjustment of the excitation light wavelength is desired, plates with thicknesses optimized for the corresponding wavelength may be arranged on the optical axis within the compensator 4. In the case of plates for use in three-photon microscopy, conventional methods require a large number of plates with varying thicknesses to realize appropriate compensation for excitation pulse wavelengths, for example, in a range of 1,200 nm to 1,800 nm.

For example, when the excitation wavelength is adjusted continuously, the plate thickness required to achieve suitable compensation for the continuously changing excitation wavelength (hereinafter, referred to as the "desired plate thickness") is assumed to range from 1.5 mm to 8.0 mm. For example, if prepared with thicknesses spaced at 0.5 mm apart, the desired plate thickness would span 14 patterns, namely, t1 = 1.5 mm, t2 = 2.0 mm, t3 = 2.5 mm, t4 = 3.0 mm, t5 = 3.5 mm, t6 = 4.0 mm, t7 = 4.5 mm, t8 = 5.0 mm, t9 = 5.5 mm, t10 = 6.0 mm, t11 = 6.5 mm, t12 = 7.0 mm, t13 = 7.5 mm, and t14 = 8.0 mm.

In conventional methods, only a single plate is arranged on the optical axis of the pulsed light L1. Thus, it is conceivable to compensate for the negative group delay dispersion by preparing a total of 14 plates, with thicknesses of t1 = 1.5 mm, t2 = 2.0 mm, t3 = 2.5 mm, t4 = 3.0 mm, t5 = 3.5 mm, t6 = 4.0 mm, t7 = 4.5 mm, t8 = 5.0 mm, t9 = 5.5 mm, t10 = 6.0 mm, t11 = 6.5 mm, t12 = 7.0 mm, t13 = 7.5 mm, and t14 = 8.0 mm. Then, a single plate appropriate for the excitation wavelength would be arranged on the optical axis. However, with this method, it is necessary to prepare a dedicated plate for each of the 14 patterns. As a result, in order to realize compensation appropriate for various excitation pulse wavelengths, a large number of plates must be prepared, leaving room for improvement.

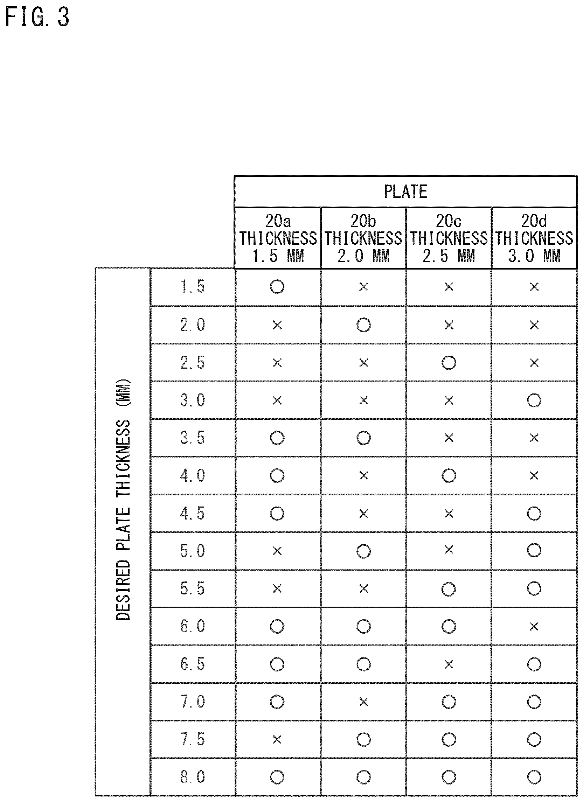

In the present embodiment, by combining plates 20 selected from the multiple plates 20 to be arranged on the optical axis within the compensator 4, the number of plates 20 required to realize compensation appropriate for various excitation pulse wavelengths can be significantly reduced. For example, the compensator 4 includes four plates 20 with thicknesses of 1.5 mm, 2.0 mm, 2.5 mm, and 3.0 mm. The compensator 4 can accommodate the 14 desired plate thicknesses t1 to t14 described above by combining the four plates 20. The plate 20 with a thickness of 1.5 mm is referred to as "plate 20a", the plate 20 with a thickness of 2.0 mm as "plate 20b", the plate 20 with a thickness of 2.5 mm as "plate 20c", and the plate 20 with a thickness of 3.0 mm as "plate 20d". Fig. 3 shows which of the plates 20a through 20d are controlled to the first state to correspond to the 14 patterns mentioned above. A circle "○" indicates the first state, while an "×" indicates the second state.

As shown in Fig. 3, by preparing four plates 20 with thicknesses of 1.5 mm, 2.0 mm, 2.5 mm, and 3.0 mm, and selecting one or more of them to allow pulsed light to pass through, the compensator 4 can accommodate the desired plate thicknesses t1 through t14. As a result, there is no need to prepare a dedicated plate for each of the 14 patterns. This significantly reduces the number of plates 20 from 14 to 4, while still realizing compensation appropriate for the excitation pulse wavelength. In the present embodiment, an example has been described in which any combination of the multiple plates 20 is set to the first state, but the invention is not limited to this example. For example, only a predetermined combination of the multiple plates 20 may be set to the first state. In other words, it is sufficient for the multiple plates 20 to have a configuration where at least a predetermined combination can be set to the first state.

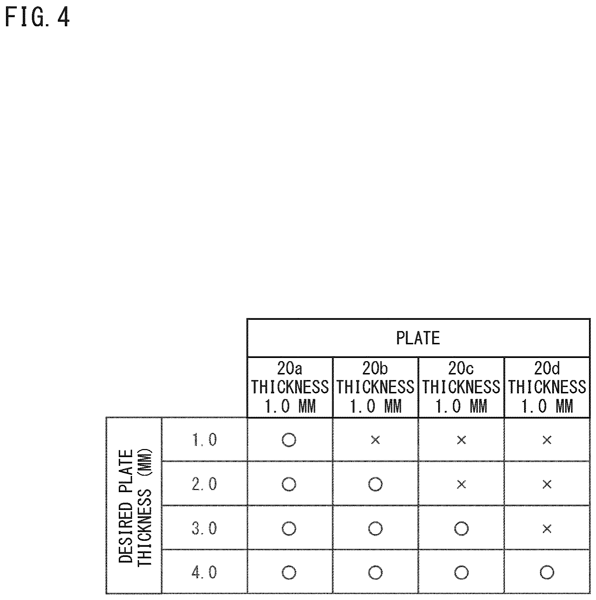

In the present embodiment, since all of the multiple plates 20 are made of the same material, their thicknesses are equally spaced. However, if different materials are included, it is desirable to determine the thickness of each plate 20 so that the positive group delay dispersion amounts are approximately equally spaced. The multiple plates 20 may be made of the same material and have the same thickness. It is assumed that the desired plate thickness is in the range of 1.0 to 4.0 mm. For example, if the plates are prepared with thicknesses spaced at 1.0 mm apart, the desired plate thickness may consist of four patterns, namely, t1 = 1.0 mm, t2 = 2.0 mm, t3 = 3.0 mm, and t4 = 4.0 mm. In conventional methods, only a single plate is arranged on the optical axis of the pulsed light L1. Therefore, it is necessary to prepare a total of four plates with thicknesses of t1 = 1.0 mm, t2 = 2.0 mm, t3 = 3.0 mm, and t4 = 4.0 mm. In the present embodiment, by combining plates 20 selected from the multiple plates 20 to be arranged on the optical axis within the compensator 4, compensation appropriate for various excitation pulse wavelengths is realized. Therefore, as shown in Fig. 4, four plates each having a thickness of 1.0 mm are prepared, and by combining these plates, the desired compensation can be realized. In such a case, the number of plates required cannot be reduced, but the total thickness of the plates required can be reduced, resulting in cost reduction.

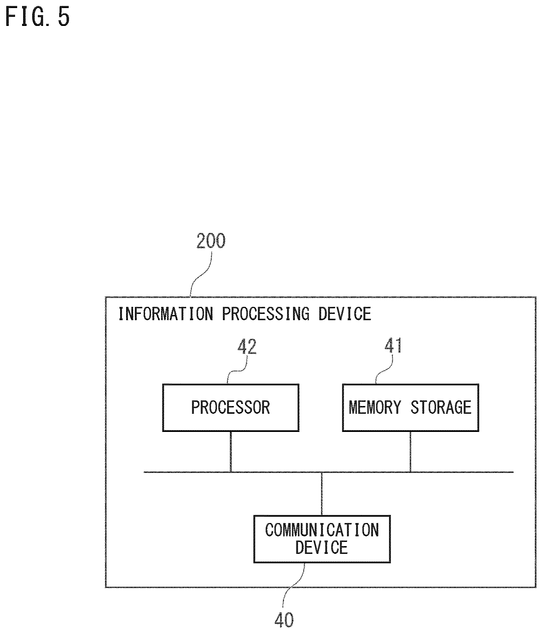

The information processing device 200 is, for example, a computer. Fig. 5 is a diagram showing a hardware configuration example of the information processing device. The information procssing device 200 includes a communication device 40, a memory storage 41, and a processor 42. It should be noted that the memory storage 41 may be an external device and does not necessarily have to be part of the information processing device 200. In the case where the memory storage 41 is an external memory storage, the information processing device 200 is connected to the memory storage 41 through a wired or wireless connection to transmit and receive information to and from the memory storage 41.

The communication device 40 is a communication interface for communicating with the photodetector 10 and other external devices. The communication network through which the communication device 40 communicates may be a wired network, a wireless network, or both.

Examples of the memory storage 41 include a nonvolatile memory such as a ROM (Read Only Memory), a HDD (Hard Disk Drive), and an SSD (Solid State Drive). The programs executed by the processor 42 may be provided via a computer-readable memory storage medium or from an external device through a wired or wireless communication network. The provided programs are stored in the memory storage 41 and executed by the processor 42.

Examples of the computer-readable memory storage medium may include an electronic memory storage medium, magnetic memory storage medium, optical memory storage medium, electromagnetic memory storage medium, and semiconductor memory storage medium. More specific examples of the computer-readable memory storage medium may include a diskette, hard disk, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), digital versatile disc (DVD), Blu-ray (RTM) disc, memory stick, and integrated circuit card.

The processor 42 reads out the programs and so forth stored in the memory storage 41 to generate an image of the sample O and identify the plate 20 to be set to the first state. Examples of the processor 42 include at least one of a CPU (Central Processing Unit), MPU (Micro Processing Unit), and GPU (Graphics Processing Unit).

The processor 42 is capable of executing a process of searching for an optimal plate thickness for a specific wavelength or a specific wavelength range of pulsed light serving as excitation light (hereinafter, referred to as "search process"). This search process is appropriately executed, for example, before observing a specimen with the microscope system MS. The optimal plate thickness refers to the thickness required to compensate for negative group delay dispersion generated at a specific wavelength or within a specific wavelength range. In other words, it is the desired plate thickness for the particular wavelength or wavelength range.

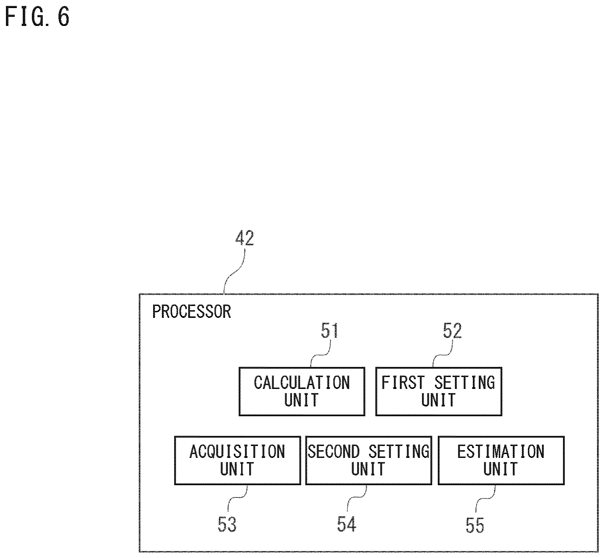

The functional units for the above search process in the processor 42 will be described with reference to Fig 6. Fig. 6 is a functional block diagram of the processor 42 according to the first embodiment. The processor 42 of the present embodiment includes a calculation unit 51, a first setting unit 52, an acquisition unit 53, a second setting unit 54, and an estimation unit 55. The calculation unit 51, the first setting unit 52, the acquisition unit 53, the second setting unit 54, and the estimation unit 55 are implemented by the processor 42 executing programs stored in the memory storage 41.

The calculation unit 51 calculates an evaluation index value for each thickness-setting value on the basis of a detection signal from the photodetector 10. The thickness-setting value is the total value obtained by summing the thicknesses of the plates 20 in the first state. The evaluation index value is, for example, the sum of detection signal values in the scanning range of the sample O. On the basis of the evaluation index value for each thickness-setting value calculated by the calculation unit 51, the first setting unit 52 sets the optimal thickness-setting value in the memory storage 41 as the optimal plate thickness for the specific wavelength. For example, the first setting unit 52 identifies the thickness-setting value that maximizes (or is in the vicinity of the maximum of) the evaluation index value as the optimal plate thickness. The thickness-setting value at which the evaluation index value is maximized may be identified through interpolation or extrapolation. As described above, the method in which the calculation unit 51 calculates an evaluation index value from the detection signal of the photodetector 10, and the first setting unit 52 searches for the optimal plate thickness for a specific wavelength on the basis of the evaluation index value, may be referred to as "first search method".

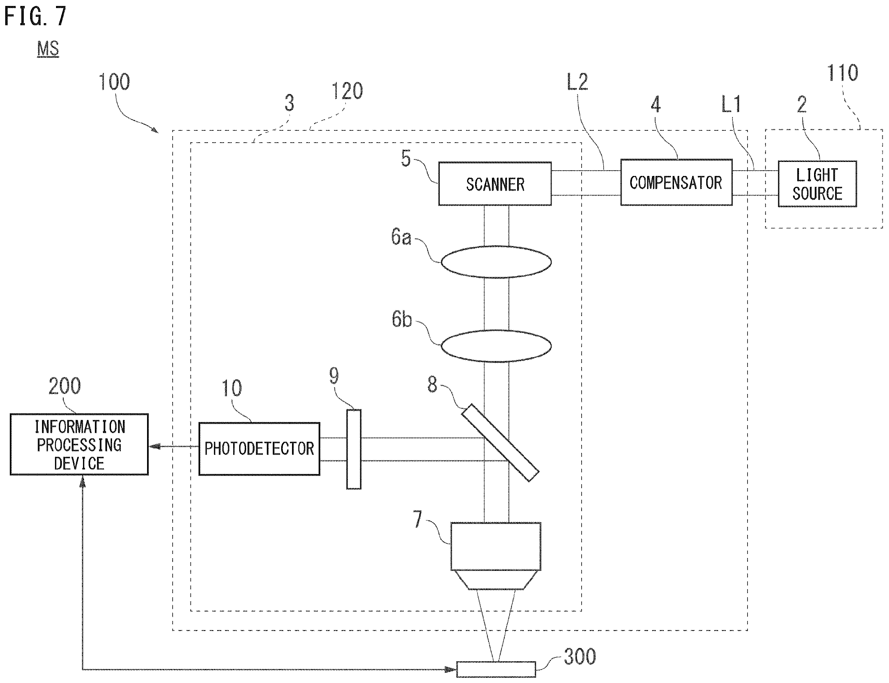

When a measurement appratus 300, which measures the pulse width of pulsed light, is connected to the information processing device 200 via a wired or wireless connection, the acquisition unit 53 acquires measurement results from the measurement appratus 300. As exemplified in Fig. 7, the measurement appratus 300 is arranged by the user in the region where the sample O is to be placed. The measurement appratus 300 is, for example, an autocorrelator. When the thickness-setting value indicating the thickness of the plate through which the pulsed light L1 of a specific wavelength passes is changed multiple times, the acquisition unit 53 acquires the corresponding measurement result from the measurement appratus 300 for each thickness-setting value.

On the basis of the measurement result for each thickness-setting value acquired by the acquisition unit 53, the second setting unit 54 sets the optimal thickness-setting value in the memory storage 41 as the optimal plate thickness for the specific wavelength. For example, the second setting unit 54 identifies the thickness-setting value that minimizes (or is in the vicinity of the minimum of) the pulse width as the optimal plate thickness. The thickness-setting value at which the pulse width is minimized may be identified through interpolation or extrapolation. As described above, the method in which the acquisition unit 53 acquires a measurement result for each thickness-setting value, and the second setting unit 54 searches for the optimal plate thickness for a specific wavelength on the basis of the measurement result, may be referred to as "second search method".

The estimation unit 55 acquires the optimal plate thickness for each wavelength by performing the process of searching for the optimal plate thickness by means of the first search method or the second search method for each of the multiple wavelengths of the pulsed light L1. The estimation unit 55 then estimates the optimal plate thickness in a specific wavelength range on the basis of the optimal plate thickness for each wavelength. For example, in the case where optimal plate thicknesses for three or more different wavelengths are set by means of the first search method or the second search method, the estimation unit 55 estimates the optimal plate thickness in a specific wavelength range by interpolating or extrapolating the multiple optimal plate thicknesses that have been set.

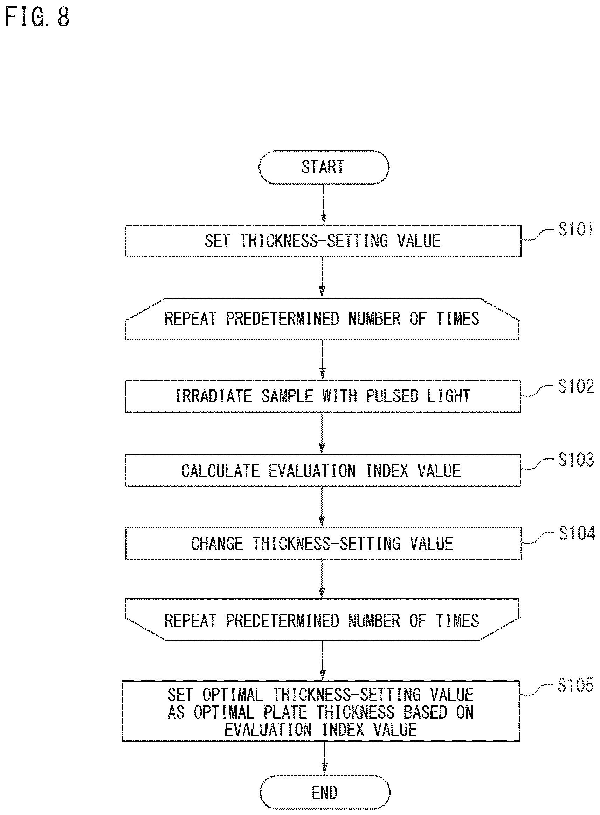

The first search method will be described below. Fig. 8 is a flowchart of the first search method. For example, the user or the information processing device 200 sets one or more predetermined plates 20 from among the multiple plates 20 to the first state, thereby setting the thickness-setting value to a predetermined plate thickness (Step S101). In the case where a thickness-setting value is set by the user, the user inputs the set thickness-setting value into the information processing device 200.

After the process in Step S101, the microscope unit 120 irradiates the sample O with the pulsed light L2 output from the compensator 4 (Step S102). The photodetector 10 detects signal light generated from the sample O by the irradiation in Step S102, and outputs a detection signal corresponding to the amount of the detected signal light to the information processing device 200.

Upon acquiring the detection signal from the photodetector 10, the calculation unit 51 calculates an evaluation index value on the basis of the detection signal (Step S103). The evaluation index value is, for example, the sum of detection signal values in the scanning range of the sample O. Once the evaluation index value calculation is complete, the thickness-setting value is changed either manually or automatically (Step S104). Once the thickness-setting value is changed, Step S102 is executed. In the case where the thickness-setting value is changed by the user, the user inputs information on the changed thickness-setting value to the information processing device 200.

The series of processes from Step S102 to Step S104 is repeated a predetermined number of times. The series of processes from Step S102 to Step S104 is performed, for example, until evaluation index values are calculated for all settable thickness-setting values.

For example, if the compensator 4 has only two plates 20a and 20b, the information processing device 200 can set three different plate thicknesses as the thickness-setting values. Specifically, the information processing device 200 calculates an evaluation index value when only the plate 20a is in the first state (thickness-setting value = 1.5 mm), an evaluation index value when only the plate 20b is in the first state (thickness-setting value = 2.0 mm), and an evaluation index value when the plates 20a and 20b are both in the first state (thickness-setting value = 3.5 mm). On the basis of the evaluation index value, the first setting unit 52 sets the optimal thickness-setting value in the memory storage 41 as the optimal plate thickness for the specific wavelength (Step S105).

The series of processes from Step S102 to Step S104 may not be performed until evaluation index values are calculated for all settable thickness-setting values. For example, the information processing device 200 may use a ternary search method to search for the thickness-setting value that maximizes the evaluation index value.

The second search method will be described below.

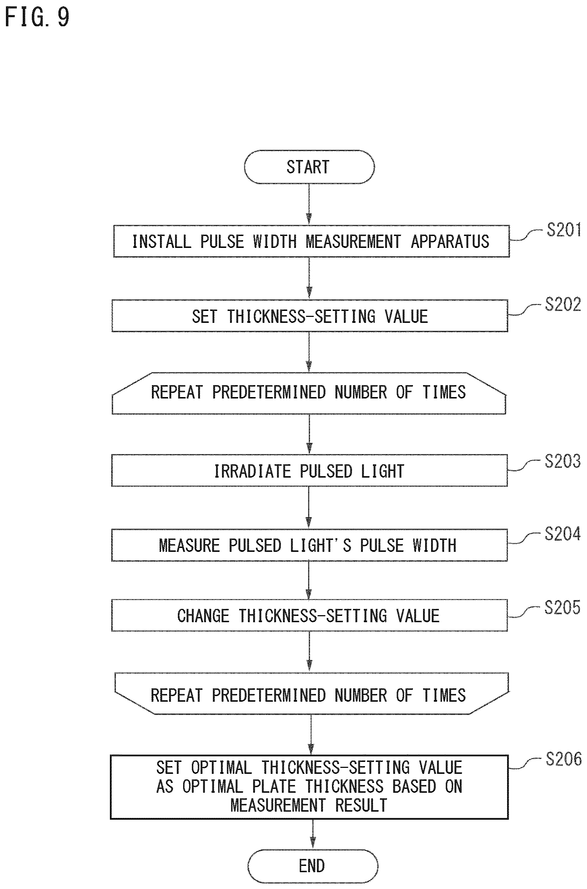

Fig. 9 is a flowchart of the second search method. First, the user places the measurement appratus 300 in the region where the sample O is to be placed (Step S201).

Next, the user or the information processing device 200 sets one or more predetermined plates 20 from among the multiple plates 20 to the first state, thereby setting the thickness-setting value to a predetermined plate thickness (Step S202). In the case where a thickness-setting value is set by the user, the user inputs the set thickness-setting value into the information processing device 200. After the process in Step S201, the microscope unit 120 irradiates the pulsed light L2 output from the compensator 4 (Step S203). The measurement appratus 300 measures the pulse width of the pulsed light L2 irradiated in Step S202, and transmits the value of the measured pulse width to the information processing device 200 (Step S204).

Once the pulse width measurement is complete, the thickness-setting value is changed either manually or automatically (Step S205). In the case where the thickness-setting value is changed by the user, the user inputs information on the changed thickness-setting value to the information processing device 200. Once the thickness-setting value is changed, Step S202 is executed again. The series of processes from Step S203 to Step S205 is repeated a predetermined number of times. For example, the series of processes from Step S203 to Step S205 is performed until pulse widths are measured for all settable thickness-setting values. Once the series of processes is complete, the second setting unit 54 sets the optimal thickness-setting value in the memory storage 41 as the optimal plate thickness for a specific wavelength on the basis of the measurement results (Step S206).

The series of processes from Step S203 to Step S205 is repeated a predetermined number of times. For example, the series of processes from Step S203 to Step S205 may not be performed until pulse widths are measured for all settable thickness-setting values. For example, the information processing device 200 may use a ternary search method to search for the thickness-setting value that minimizes the pulse width.

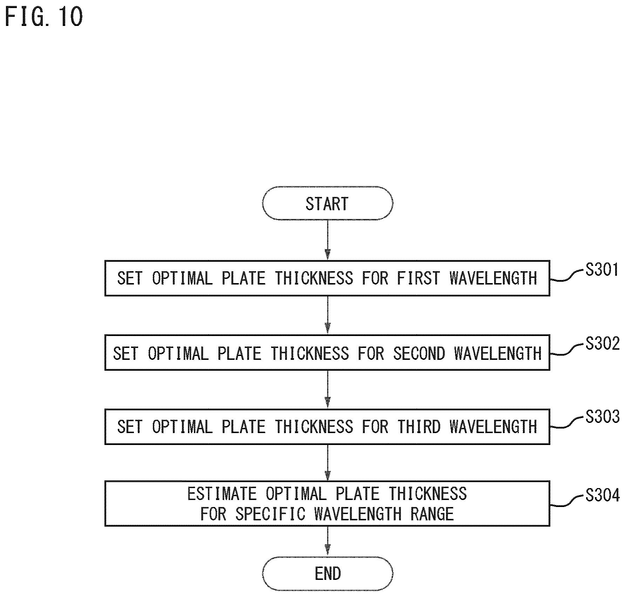

A third search method will be described below. The third search method is a method of searching for an optimal plate thickness in a specific wavelength range of the pulsed light L1, rather than for a specific wavelength of the pulsed light L1. Fig. 10 is a flowchart of the third search method according to the first embodiment. First, the information processing device 200 sets the optimal plate thickness for a first wavelength in the memory storage 41 by means of the first search method or the second search method (Step S301). The information processing device 200 sets the optimal plate thickness for a second wavelength different from the first wavelength in the memory storage 41, using a method similar to that in Step S301 (Step S302).

The information processing device 200 sets the optimal plate thickness for a third wavelength, which differs from both the first and second wavelengths, in the memory storage 41, using a method similar to that in Step S301 (Step S303). Then, the estimation unit 55 estimates the optimal plate thickness in a specific wavelength range by interpolating or extrapolating between the three optimal plate thicknesses obtained in Step S301, Step S302, and Step S303 (Step S304). The estimation unit 55 sets in the memory storage 41 data on the estimated optimal plate thickness in the specific wavelength range.

As described above, the compensator 4 according to the first embodiment has multiple plates 20 that generate positive group delay dispersion, and is capable of switching each plate between the first state where the plate is arranged at a position through which the pulsed light passes, and the second state where the plate is arranged at a position through which the pulsed light does not pass, depending on the wavelength of the pulsed light. According to such a configuration, it is possible to compensate for negative group delay dispersion of excitation pulses used in a three-photon microscope. The compensator 4 can reduce either the number or the total thickness of the plates 20 compared to conventional methods, while realizing compensation appropriate for the excitation pulse wavelength.

### [Second Embodiment]

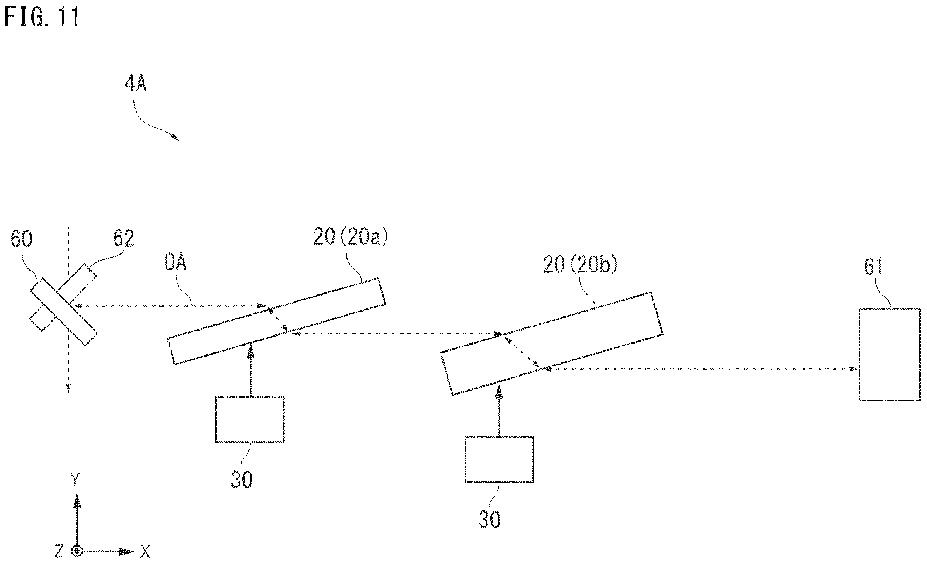

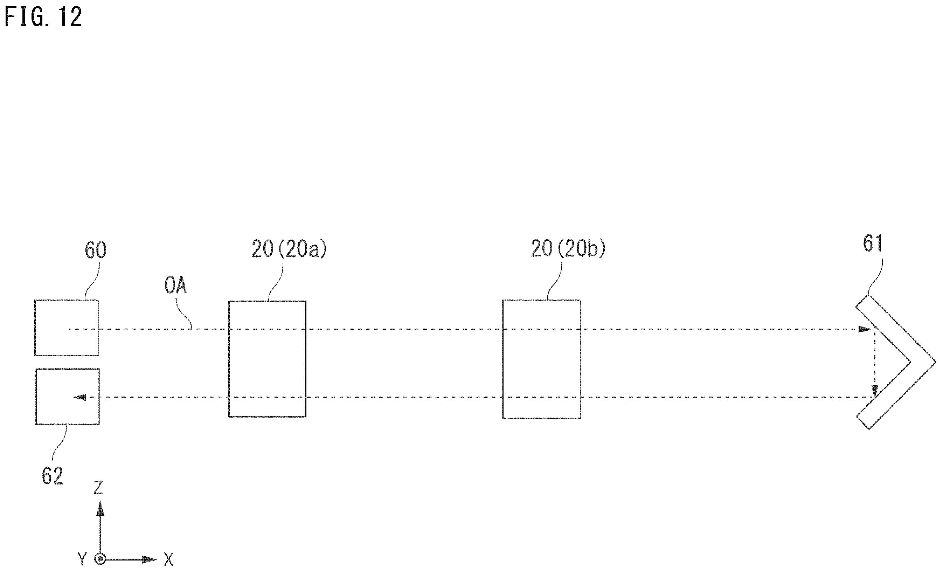

A microscope system MSA according to a second embodiment is configured by replacing the compensator 4 of the microscope 100 according to the first embodiment, shown in Fig. 1, with a compensator 4A shown in Fig. 11 and Fig. 12.

Fig. 11 and Fig. 12 are diagrams showing a configuration example of the compensator 4A according to the second embodiment. Fig. 11 is a schematic diagram of the compensator 4A according to the second embodiment, viewed from above (Z direction). Fig. 12 is a schematic diagram of the compensator 4A according to the second embodiment, viewed from a side (Y direction). In the example shown in Fig. 12, the switching units 30 are omitted for the sake of convenience of description. The compensator 4A includes multiple plates 20, switching units 30, a first mirror 60, a second mirror 61, and a third mirror 62. Each of the first mirror 60, the second mirror 61, and the third mirror 62 is an example of a reflective element. In the example shown in Fig. 11 and Fig. 12, two plates 20a, 20b, as the multiple plates 20, are arranged in the first state.

The first mirror 60 reflects the pulsed light L1 from the light source 2 in the direction in which the plate 20a is arranged. In the example shown in Fig. 11 and Fig. 12, the first mirror 60 reflects the pulsed light L1 from the +Y direction to the +X direction. The pulsed light L1 reflected by the first mirror 60 is incident on the plate 20a at a specific incident angle. The pulsed light L1 incident on the plate 20a is refracted at the surface of the plate 20a and travels within the plate 20a. The pulsed light L1 is refracted when exiting from inside the plate 20a and enters the plate 20b at a specific incidence angle. The pulsed light L1 incident on the plate 20b is refracted at the surface of the plate 20b and travels within the plate 20b. When the pulsed light L1 exits from inside the plate 20b, it is refracted and directed toward the second mirror 61.

The second mirror 61 reflects the pulsed light L1 from the first direction to a second direction opposite to the first direction. In the example shown in Fig. 11 and Fig. 12, the second mirror 61 bends the pulsed light L1 from the plate 20b by 180 degrees by reflecting the pulsed light L1 traveling in the +X direction to the -X direction. Therefore, the pulsed light L1 makes a round trip within the compensator 4A. The pulsed light bent by the second mirror 61 travels in the -X direction, which is the opposite direction to the incident direction, and enters the plate 20b. The second mirror 61 is, for example, a roof mirror having two reflective surfaces. In the case where the second mirror 61 is a roof mirror, the pulsed light L1 incident on the second mirror 61 from the plate 20b is reflected downward (in the -Z direction) by the first reflective surface, and is reflected to the -X direction, which is the opposite direction to the incident direction, by the second reflective surface.

The pulsed light reflected by the second mirror 61 is incident on the plate 20b at a specific incident angle. The pulsed light incident on the plate 20b is refracted at the surface of the plate 20b and travels within the plate 20b. The pulsed light is refracted when exiting from inside the plate 20b and enters the plate 20a at a specific incidence angle. The pulsed light L1 leaving the plate 20b and entering the plate 20a is refracted at the surface of the plate 20a and travels within the plate 20a. When the pulsed light L1 exits from inside the plate 20a, it is refracted and directed toward the third mirror 62. As shown in Fig. 11 and Fig. 12, the pulsed light passes through different positions on the plate 20a and the plate 20b during its forward and return paths. This allows for efficient extraction of the light that has passed through the plates.

The third mirror 62 is positioned below the first mirror 60. The third mirror 62 reflects the pulsed light exiting in the -X direction from inside the plate 20a to the -Y direction. The pulsed light L1 reflected to the -Y direction travels toward the microscope unit 120 as pulsed light L2.

Thus, in the compensator 4A, pulsed light is reflected by the second mirror 61 within the compensator 4A, so that the pulsed light passes through the plates 20 in the first state twice. In other words, the pulsed light passes through the plates 20 in the first state on the forward path from the first mirror 60 to the second mirror 61, and passes through the plates 20 in the first state again on the return path from the second mirror 61 to the third mirror 62. This makes it possible to suppress shifts in the optical path of the pulsed light caused by variations in the thickness of the plate 20.

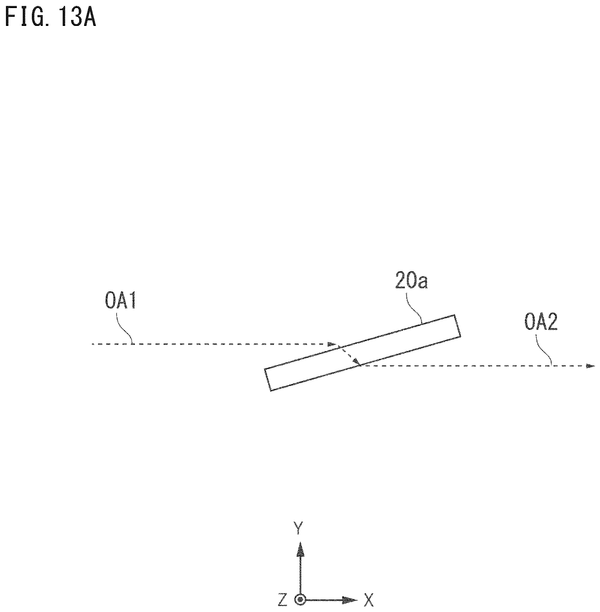

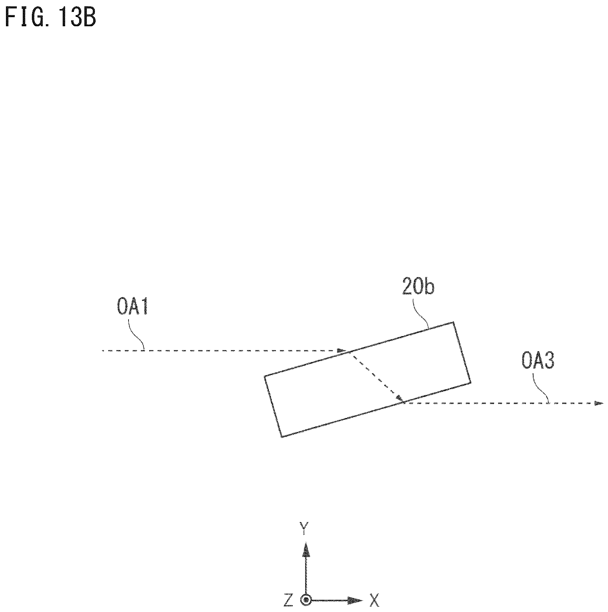

For example, as shown in Fig. 13A and Fig. 13B, if the thickness of the plate 20 changes in the case where the pulsed light passes through the plate 20 in the first state only once within the compensator 4A, that is, in the case where the pulsed light does not make a round trip, the optical path of the compensated pulsed light will shift. In such a case, realignment is required. For example, as shown in Fig. 13A, in the case where the pulsed light L1 passes through the plate 20a only once, the optical path of the pulsed light L1 changes from the optical path OA1 to the optical path OA2. On the other hand, as shown in Fig. 13B, in the case where the pulsed light L1 passes through the plate 20b only once, the optical path of the pulsed light L1 changes from the optical path OA1 to the optical path OA3. That is to say, if the plate 20, through which the pulsed light L1 passes, changes from the plate 20a to the plate 20b, the optical path of the compensated pulsed light L1 will shift from the optical path OA2 to the optical path OA3. This results in an optical path shift.

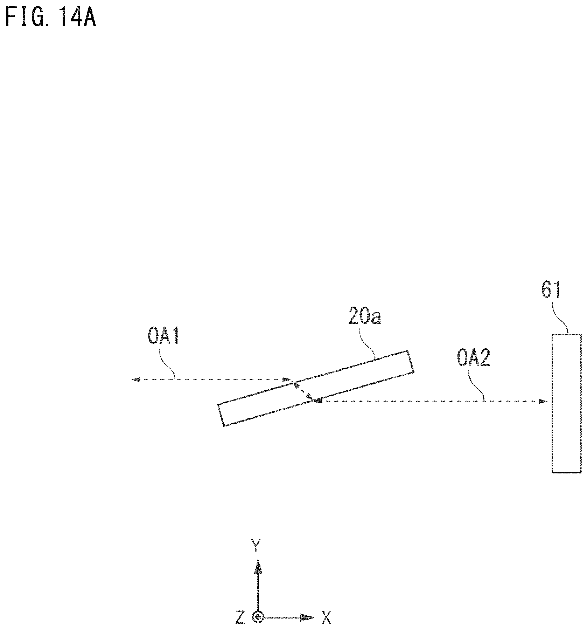

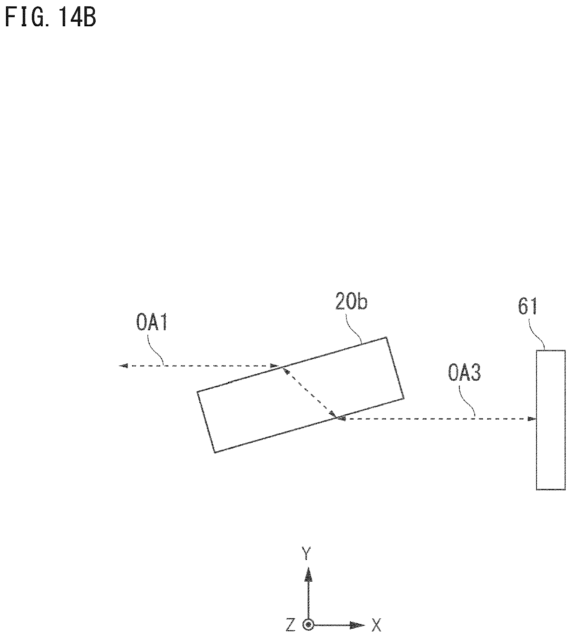

On the other hand, as shown in Fig. 14A, in the case where the pulsed light L1 makes a round trip and passes through the plate 20a twice, the optical path of the pulsed light L1 changes from the optical path OA1 to the optical path OA2 on the forward path, but changes from the optical path OA2 to the optical path OA1 on the return path. As shown in Fig. 14B, in the case where the pulsed light L1 makes a round trip and passes through the plate 20b twice, the optical path of the pulsed light L1 changes from the optical path OA1 to the optical path OA3 on the forward path, but changes from the optical path OA3 to the optical path OA1 on the return path. That is to say, even if the plate 20, through which the pulsed light L1 passes, changes from the plate 20a to the plate 20b, the optical path of the compensated pulsed light L1 will maintain the optical path OA1 and no optical path shift will occur. Thus, even if the thickness of the plate 20 changes, the optical path of the compensated pulsed light L1 will not shift. Therefore, even if the thickness of the plate 20 in the first state changes, the optical path of the compensated pulsed light L1 will not shift, eliminating the need for realignment.

In the case where the pulsed light makes a round trip within the compensator 4A, passing through the plate 20 in the first state twice, the plate thickness required to generate the compensation amount, that is, the thickness-setting value is twice the total thickness of all of the plates 20 in the first state. Specifically, in the compensator 4A, in the case where the plate 20a having a thickness of 1.5 mm and the plate 20b having a thickness of 2.0 mm are in the first state, and pulsed light makes a round trip within the compensator 4A, the total plate thickness in the compensator 4 can be regarded as (1.5 mm + 2.0 mm) × 2 = 7.0 mm. That is to say, the compensator 4A can provide the amount of compensation corresponding to a plate thickness of 7.0 mm by setting both the plate 20a and the plate 20b to the first state.

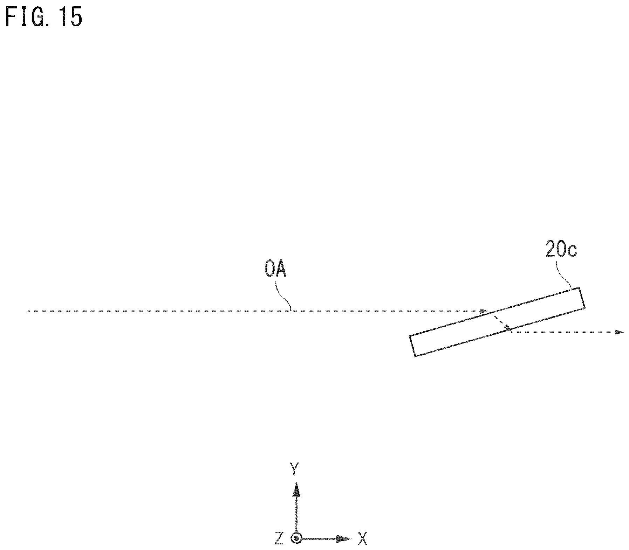

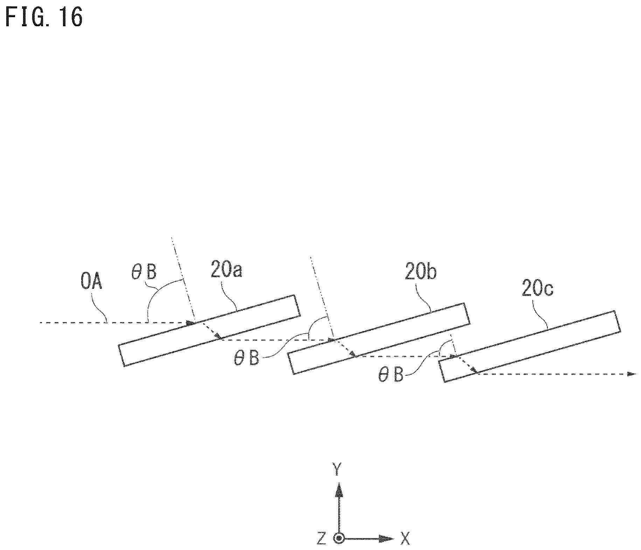

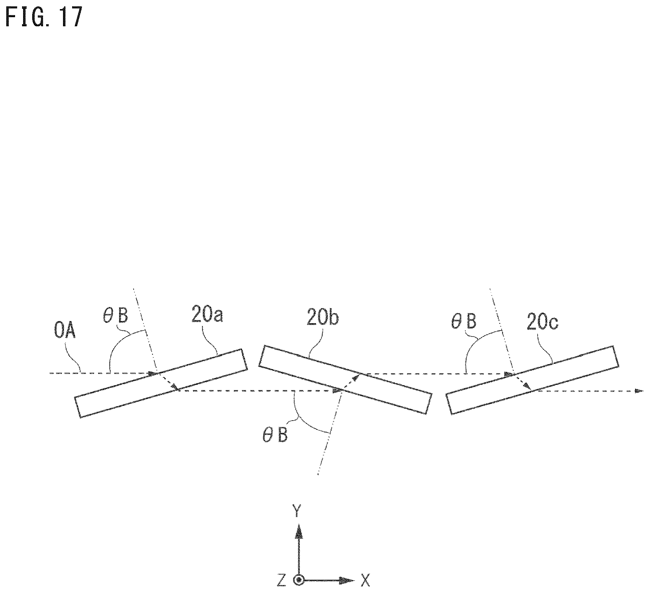

Fig. 15 shows a case where the plates 20a, 20b are in the second state and a plate 20c is in the first state. Fig. 16 and Fig. 17 show a case where the plate 20a, the plate 20b, and the plate 20c are in the first state. The plates 20a, 20b and 20c are all made of the same material.

In Fig. 16, the plates 20a, 20b, and 20c are arranged so that the pulsed light L1 is incident at a Brewster angle θB, and the incident surface of the plate 20a, the incident surface of the plate 20b, and the incident surface of the plate 20c are oriented in the same direction. In such a case, since the optical path OA of the pulsed light L1 sequentially shifts in the -Y direction as it passes through the plate 20a and the plate 20b, the optical path OA of the pulsed light L1 entering the plate 20c shifts significantly in the -Y direction compared to the optical path OA of the pulsed light L1 entering the plate 20c in Fig. 15. This may require an increase in the size of the plate 20c, which may lead to an increase in cost.

On the other hand, in Fig. 17, the plates 20a, 20b, and 20c are arranged so that the pulsed light L1 is incident at a Brewster angle θB, but the incident surface of the plate 20a and the incident surface of the plate 20b are oriented in different directions. The incident surface of the plate 20b and the incident surface of the plate 20c are also oriented in different directions. In such a case, since the optical path OA of the pulsed light L1 shifts in the -Y direction as it passes through the plate 20a but shifts in the +Y direction as it passes through the plate 20b, the amount of shift in the optical path OA of the pulsed light L1 entering the plate 20c is suppressed compared to the optical path OA of the pulsed light L1 entering the plate 20c in Fig. 15.

As shown in Fig. 17, by arranging the incident surfaces of the plates in different orientations, the incidence angle on the plates becomes the Brewster angle θB, which suppresses the reflectance while suppressing the amount of shift in the optical path OA. This eliminates the need to increase the size of the plates, thus enabling cost reduction.

The information processing device 200 according to the second embodiment is similar to that of the first embodiment, and is capable of executing at least one of the first search method, the second search method, and the third search method described in the first embodiment. In other words, when searching for an optimal plate thickness for a specific wavelength of pulsed light, the information processing device 200 can execute at least one of the first search method and the second search method. When searching for an optimal plate thickness in a specific wavelength range of pulsed light, the information processing device 200 can execute the third search method.

As described above, the compensator 4A according to the second embodiment has multiple plates 20 that generate positive group delay dispersion, and is capable of switching each plate between the first state where the plate is arranged at a position through which the pulsed light passes, and the second state where the plate is arranged at a position through which the pulsed light does not pass, depending on the wavelength of the pulsed light. According to such a configuration, it is possible to compensate for negative group delay dispersion that occurs in a three-photon microscope. The compensator 4A can reduce either the number or the total thickness of the plates 20 compared to conventional methods, while realizing compensation appropriate for the excitation pulse wavelength. The compensator 4A has a configuration that allows pulsed light to make a round trip, and allows the light to pass through the plates 20 in the first state on both the forward path and the return path. With such a configuration, the optical path will not shift, even if the thickness of plate 20 changes. Therefore, realignment is not required.

In the second embodiment, the number of times pulsed light passes through each plate in the first state is set to two by reflecting the pulsed light once. However, the invention is not limited to this configuration. For example, the compensator 4A may have two or more second mirrors 61 and reflect pulsed light two or more times off the multiple second mirrors 61, thereby setting the number of times the pulsed light passes through each plate in the first state to three or more times. For example, the compensator 4A may allow the pulsed light L1 to make one round trip or two or more round trips.

Fig. 1 shows an example in which the microscope unit 120 includes the compensator 4, but the invention is not limited to this example. For example, the light source unit 110 according to the first embodiment may include the compensator 4. Similarly, in the second embodiment, the light source unit 110 may include the compensator 4A.

The embodiments of the invention have been described above. However, the technical scope of the present disclosure is not limited to the modes described in the above embodiments. One or more of the requirements described in the above embodiments may be omitted in some cases. One or more of the requirements described in the above embodiments may be combined where appropriate. Furthermore, the contents of Japanese Patent Application No. 2023-040234 and all documents cited in the detailed description of the present invention are incorporated herein by reference to the extent permitted by law.

### Description of Reference Signs

- MS, MSA:: Microscope system
- 2:: Light source
- 3:: Irradiation unit
- 4:: Compensator
- 20:: Plate
- 30:: Switching unit
- 51:: Calculation unit
- 52:: First setting unit
- 53:: Acquisition unit
- 54:: Second setting unit
- 55:: Estimation unit
- 100:: Microscope
- 110:: Light source unit
- 120:: Microscope unit
- 200:: Information processing device
- 300:: Measurement appratus

## Claims

1. A compensator that compensates for negative group delay dispersion of pulsed light irradiated onto a sample via an optical system, the negative group delay dispersion being caused to occur by the optical system, the compensator comprising
a plurality of plates that generate positive group delay dispersion, and
a switching unit that can switch each plate between a first state where the plate is arranged in a position through which the pulsed light passes and a second state where the plate is arranged in a position through which the pulsed light does not pass, and can set a predetermined combination of the plurality of plates to the first state according to a wavelength of the pulsed light.

2. The compensator according to claim 1,
wherein the plurality of plates differ from each other in at least one of material or thickness.

3. The compensator according to claim 1 or 2,
wherein the plurality of plates are installed so that the pulsed light is incident thereon at a Brewster angle.

4. The compensator according to any one of claims 1 to 3, comprising
a reflective element that causes the pulsed light to make a round trip within a region where the plate in the first state is arranged, by reflecting the pulsed light from a first direction to a second direction opposite to the first direction,
wherein the pulsed light passes through all of the plates in the first state one or more times in both a forward path and a return path.

5. The compensator according to any one of claims 1 to 4,
wherein the plurality of plates include plates made of the same material but having differently oriented incident surfaces for the pulsed light.

6. The compensator according to claim 4,
wherein the reflective element is a roof mirror, and
wherein a position on the plate through which the pulsed light passes differs between the forward path and the return path.

7. The compensator according to any one of claims 1 to 6,
wherein materials of the plurality of plates include at least one of silicon, zinc selenide, and tellurium dioxide.

8. A microscope system comprising
the compensator according to any one of claims 1 to 7,
an irradiation unit that irradiates the sample with the pulsed light output from the compensator,
a photodetector that detects signal light from the sample, and
an information processing device that acquires a signal from the photodetector,
wherein the information processing device includes
a calculation unit that, when a thickness-setting value, which is a total thickness of the plates through which the pulsed light passes, is changed multiple times, calculates for each thickness-setting value an evaluation index value on the basis of the signal, and
a setting unit that sets an optimal thickness-setting value for a wavelength of the pulsed light on the basis of the evaluation index value.

9. A microscope system comprising
the compensator according to any one of claims 1 to 7,
a measurement appratus that measures a pulse width of the pulsed light,
an irradiation unit that irradiates the measurement appratus with the pulsed light output from the compensator, and
an information processing device that acquires a measurement result measured by the measurement appratus,
wherein the information processing device includes
an acquisition unit that, when a thickness-setting value, which is a total thickness of the plates through which the pulsed light passes, is changed multiple times, acquires the measurement result for each thickness-setting value, and
a setting unit that sets an optimal thickness-setting value for a wavelength of the pulsed light on the basis of a plurality of the measurement results acquired by the acquisition unit.

10. The microscope system according to claim 8,
wherein the information processing device
finds the optimal thickness-setting value for each of a plurality of wavelengths by performing a process of setting the thickness-setting value on the basis of the evaluation index value at each wavelength, and estimates an optimal thickness-setting value within a specific wavelength range on the basis of the optimal thickness-setting value for each wavelength.

11. The microscope system according to claim 9,
wherein the information processing device
finds the optimal thickness-setting value for each of a plurality of wavelengths by performing a process of setting the thickness-setting value on the basis of the measurement result at each wavelength, and estimates an optimal thickness-setting value within a specific wavelength range on the basis of the optimal thickness-setting value for each wavelength.

12. A compensation method for compensating for negative group delay dispersion of pulsed light irradiated onto a sample via an optical system, the negative group delay dispersion being caused to occur by the optical system, the compensation method comprising
a step of, for a plurality of plates that generate positive group delay dispersion, switching each plate between a first state where the plate is arranged in a position through which the pulsed light passes and a second state where the plate is arranged in a position through which the pulsed light does not pass,
wherein the step includes a step of setting a predetermined combination of the plurality of plates to the first state according to a wavelength of the pulsed light.
